# EUROPEAN PATENT APPLICATION

(11) **EP 4 852 152 A1**
(43) Date of publication of application: **09.12.2026**
(21) Application number: 25882936.5
(22) Date of filing: 14.07.2025
(51) Int. Cl.: H01M 10/6554, H01M 10/42, H01M 10/658, H01M 50/24, B32B 7/027, B32B 9/00, B32B 7/12

(54) **BATTERY-PROTECTING FLAME RETARDANT SHEET AND BATTERY ASSEMBLY COMPRISING SAME**

(30) Priority: 21.10.2024 KR 20240144071
(71) Applicant: LG Energy Solution, Ltd., Seoul 07335 (KR)
(72) Inventor: LEE, Changhun, Daejeon 34122 (KR); JEON, Yong Tae, Daejeon 34122 (KR)
(74) Representative: Plasseraud IP
(86) International application number: PCT/KR2025/010273
(87) International publication number: WO 2026/089204

(57) **Abstract**

According to the present disclosure, provided is a battery-protecting flame retardant sheet disposed inside or outside a battery assembly, the battery-protecting flame retardant sheet comprising: a flame retardant laminate including a plurality of base sheets, which include a flame retardant material and are stacked in a first direction, and adhesive members interposed between the plurality of base sheets; and a heat insulating member which includes a heat insulating material so as to suppress heat transfer, and which is disposed on at least one of two outermost surfaces of the flame retardant laminate in the first direction.

## Description

### Technical Field

This application claims the benefit of Korean Patent Application No. 10-2024-0144071, filed on October 21, 2024, in the Korean Intellectual Property Office, the disclosure of which is incorporated herein by reference in its entirety.

The present disclosure relates to a battery-protecting flame retardant sheet and a battery assembly including the same.

### Background Art

Since being rechargeable and dischargeable, a secondary battery is widely used in a mobile device such as a digital camera, a mobile phone, and a laptop computer. Particularly, the secondary battery is spotlighted as an energy source for an electric vehicle, an energy storage system (ESS), or the like.

As high-capacity and high-output power is required for the electric vehicle or the energy storage system, a battery module receiving multiple secondary batteries (e.g., battery cells) into the housing, a battery pack including the multiple secondary batteries as multiple battery modules, or a battery assembly that is a battery device such as a cell-to-pack (CTP) device directly receiving the multiple secondary batteries into a pack is widely used.

Meanwhile, in the battery pack in which a plurality of battery modules is densely disposed, when a thermal runaway situation occurs in one battery module, a fire is propagated to an adjacent battery module, so that the entire battery pack has a risk of being on fire. Similarly, the entire CTP device has a risk of being on fire as a fire in a battery cell in a CTP structure is propagated to an adjacent battery cell.

In addition, when the internal pressure of the battery assembly is increased to a predetermined level or more because of a gas generated in the battery assembly due to a fire, the battery assembly has a risk of explosion.

In order to solve such difficulty, a battery protection device for preventing the propagation of a flame to another adjacent battery assembly even if the fire occurs in the battery assembly and meanwhile appropriately adjusting the internal pressure of the battery assembly so that the internal pressure of the battery assembly is not increased to a dangerous level or more is required.

### Detailed Description of the Invention

### Technical Goals

The present disclosure is proposed to solve at least a portion of the above-described difficulty in the related art and is to provide a battery-protecting flame retardant sheet having high-level thermal insulation and flame retardancy while having a small thickness.

In addition, the present disclosure is to provide the battery protective sheet which has an appropriate level of bursting strength in order to prevent explosion of a battery assembly.

### Technical solutions

According to an example embodiment of the present disclosure, there is provided a battery-protecting flame retardant sheet disposed inside or outside a battery assembly and including a flame-retardant stack including a plurality of base sheets including a flame-retardant material and stacked in a first direction and an adhesive member interposed between the plurality of base sheets, and a heat-insulating member that includes a heat-insulating material, is configured to suppress heat transfer, and is disposed on at least one of the two outermost surfaces in the first direction of the flame-retardant stack.

The flame-retardant material of the plurality of base sheets may include synthetic mica.

The overall thickness of the battery-protecting flame retardant sheet in the first direction, including the flame-retardant stack and the heat-insulating member, may be greater than or equal to 0.05 mm and less than or equal to 0.3 mm.

A minimum value of a thickness of the base sheet may be 0.006 mm.

The heat-insulating material of the heat-insulating member may include a ceramic material.

The heat-insulating member is coated on the both surfaces of the flame-retardant stack.

A thickness of the heat-insulating member may be greater than or equal to 0.02 mm and less than or equal to 0.1 mm.

The flame-retardant stack and the heat-insulating member stacked in the first direction may be configured to have a maximum bursting strength value of 500 kPa against an external force acting in the first direction.

The adhesive member may be partially disposed on a surface of the base sheet.

The flame-retardant stack may include an air gap formed between the adhesive members which are partially disposed.

According to an example embodiment, there is also provided a battery assembly including the battery-protecting flame retardant sheet, a plurality of battery cells, and a main frame configured to receive the plurality of battery cells.

### Effects of the Invention

According to an example embodiment of the present disclosure, it is possible to provide a battery-protecting flame retardant sheet having thermal insulation, flame retardancy, and bursting strength within a desired range while having a small thickness.

### Brief Description of Drawings

FIG. 1 is an exploded perspective diagram illustrating a battery assembly to which a battery-protecting flame retardant sheet according to an example embodiment of the present disclosure is applied.
FIG. 2 is a cross-sectional diagram illustrating a cross section, of a battery assembly to which a battery-protecting flame retardant sheet according to an example embodiment of the present disclosure is applied, taken along line I-I' of FIG. 1.
FIG. 3 is a cross-sectional diagram illustrating a thermal runaway situation in a battery assembly of FIG. 2.
FIG. 4 is a cross-sectional diagram illustrating a cross section, of a battery-protecting flame retardant sheet according to an example embodiment of the present disclosure, taken along line I-I' of FIG. 1.
FIG. 5 is a cross-sectional diagram illustrating a cross section, of a battery-protecting flame retardant sheet according to another example embodiment of the present disclosure, taken along line I-I' of FIG. 1.
FIG. 6 is a diagram illustrating a result of a pyro test for a battery-protecting flame retardant sheet according to an example embodiment of the present disclosure.

### Mode for Carrying Out the Invention

Terms used in the description of the example embodiments are selected, as much as possible, from general terms that are widely used at present while taking into consideration the functions obtained in accordance with the present disclosure, but these terms may be replaced by other terms based on intentions of those skilled in the art, customs, the emergence of new technologies, or the like. Also, in a particular case, terms that are arbitrarily selected by the applicant of the present disclosure may be used. In this case, the meanings of these terms may be described in corresponding description parts of the disclosure. Accordingly, it may be noted that the terms used herein should be construed based on practical meanings thereof and the whole content of this specification, rather than being simply construed based on names of the terms.

The term "part" for an element used in the present disclosure may be granted or used together with another only in consideration of convenience for preparing the specification, and the term itself does not have a distinguished meaning or role. Also, with respect to describing the present disclosure, a detailed description of an associated art known to the public will be omitted when determined as obscuring the gist of the present disclosure. In addition, the accompanying drawings are merely to understand the example embodiments included in the present disclosure, and the technical idea of the present disclosure is not limited by the accompanying drawings. It should be understood that the accompanying drawings include all modifications, equivalents, or alternatives included in the idea and the scope of the present disclosure.

Terms including an ordinal number such as "first" or "second" used in the present specification may be used to describe various elements. However, the elements may not be limited by the terms including the ordinal number. The terms may be used to contextually distinguish one element from another element in a part of the specification.

When an element is described as being "connected" or "joined" to another element, the element may be directly connected or joined to the other element, but it may be understood also that still another element is present in between. On the contrary, when an element is described as being "directly connected" or "directly joined" to the other element, it may be understood that still another element is absent in between.

In the following descriptions, terms in a singular form may include terms in a plural form unless an apparently and contextually conflicting description is present.

Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

Throughout the specification, expression "at least one of a, b, and c" may include 'a only', 'b only', 'c only', 'a and b', 'a and c', 'b and c', or 'all of a, b, and c'.

In the following description, example embodiments of the present disclosure will be described in detail with reference to the accompanying drawings so that those skilled in the art can easily carry out the present disclosure. However, the present disclosure may be embodied in many different forms and is not limited to the example embodiments described herein.

A battery assembly described in the present disclosure may refer to a battery module, a battery pack, or a large-capacity battery device including a plurality of battery cells, such as a cell-to-pack (CTP) device.

Hereinafter, the example embodiments of the present disclosure will be described with reference to the accompanying drawings.

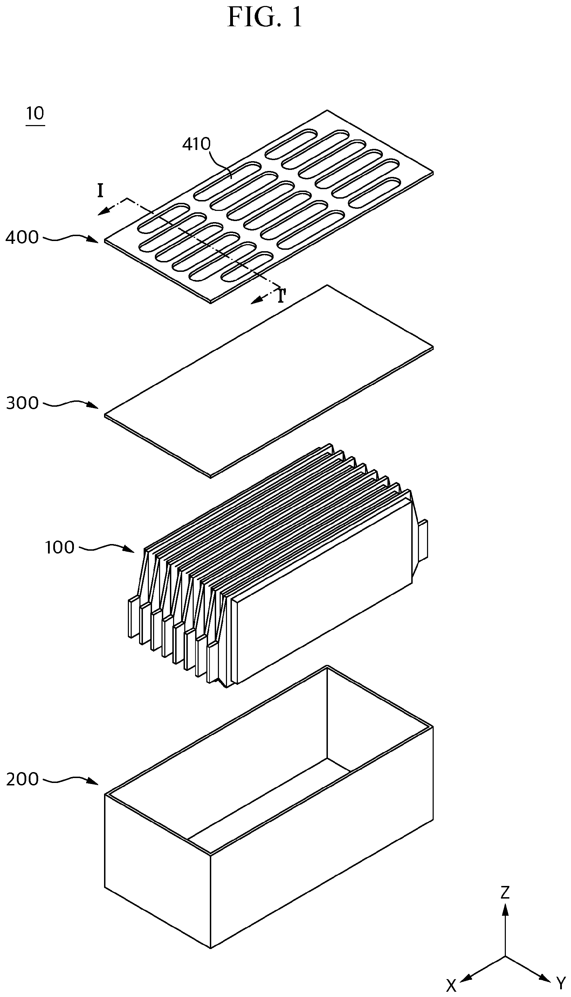

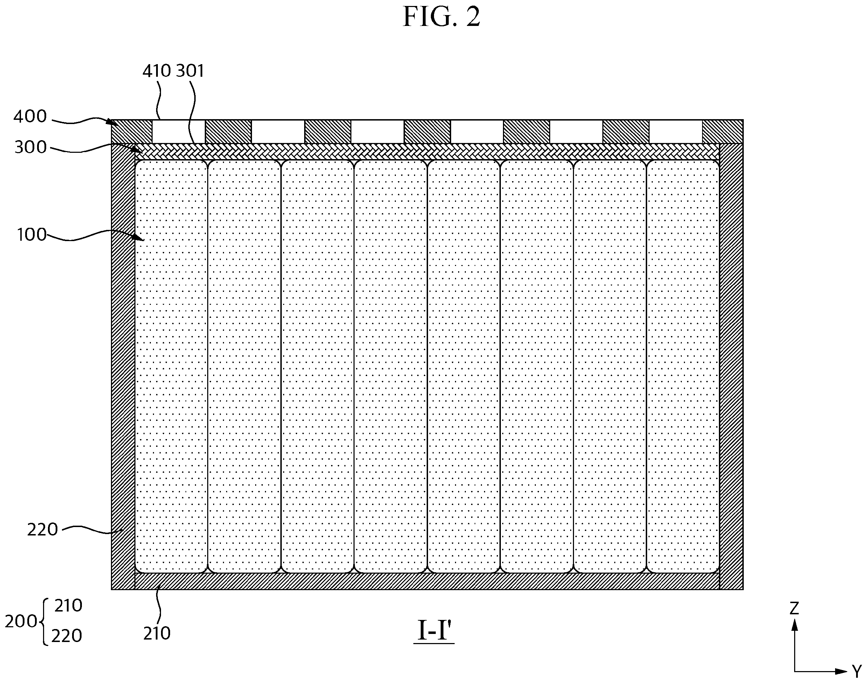

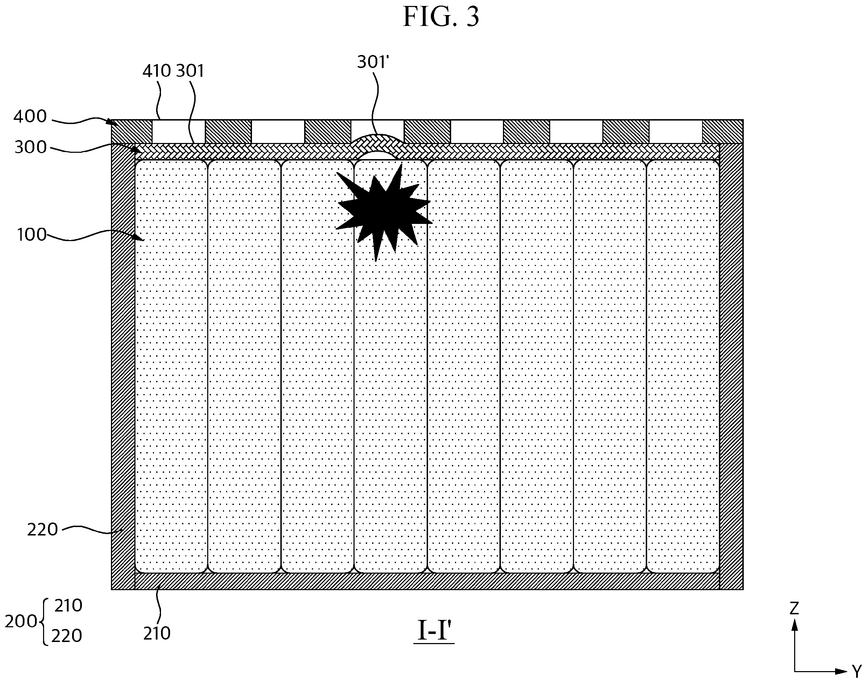

FIG. 1 is an exploded perspective diagram illustrating a battery assembly 10 to which a battery-protecting flame retardant sheet 300 according to an example embodiment of the present disclosure is applied. FIG. 2 is a cross-sectional diagram illustrating a cross section, of the battery assembly 10 to which the battery-protecting flame retardant sheet 300 according to an example embodiment of the present disclosure is applied, taken along line I-I' of FIG. 1. FIG. 3 is a cross-sectional diagram illustrating a thermal runaway situation in the battery assembly 10 of FIG. 2.

Referring to FIGS. 1 through 3, the battery assembly 10 to which the battery-protecting flame retardant sheet 300 according to an example embodiment of the present disclosure is applied may include a plurality of battery cells 100.

The plurality of battery cells 100 according to an example embodiment of the present disclosure may be a rechargeable and dischargeable secondary battery. A battery cell 100 may be various types of secondary batteries such as a pouch-type battery, a rectangular battery, and a cylindrical battery. However, a case in which a pouch-type battery cell 100 is applied is illustrated in the present disclosure as a matter of convenience, and cases in which other types of secondary batteries such as the rectangular battery and the cylindrical battery are applied are not excluded.

The battery assembly 10 to which the battery-protecting flame retardant sheet 300 according to an example embodiment of the present disclosure is applied may include a main frame 200. The main frame 200 may receive the plurality of battery cells 100. For example, referring to FIGS. 2 and 3, the main frame 200 may be formed with a lower frame 210 and a side frame 220. The lower frame 210 may be a plate positioned below the plurality of battery cells 100. The side frame 220 may be a wall formed around the lower frame 210. The main frame 200 may form a predetermined space by the lower frame 210 and the side frame 220 and receive the plurality of battery cells 100 in the space.

The battery assembly 10 to which the battery-protecting flame retardant sheet 300 according to an example embodiment of the present disclosure is applied may include an upper cover 400. The upper cover 400 may be provided to cover an upper portion of the main frame 200. At this point, the upper cover 400 may include at least one venting hole 410. The venting hole 410 may be formed by penetrating a surface of the upper cover 400 along a direction perpendicular thereto and may be a hole for discharging a high-pressure gas, a foreign substance, or the like to an outside of the battery assembly 10 when thermal runaway occurs in the battery assembly 10.

The battery-protecting flame retardant sheet 300 according to an example embodiment of the present disclosure may be disposed inside or outside the battery assembly 10. For example, the battery-protecting flame retardant sheet 300 may be disposed between the upper cover 400 and the plurality of battery cells 100. When the thermal runaway occurs in one of the plurality of battery cells 100, a flame-retardant sheet disposed thereon may be proof against high temperature to prevent propagation of a flame.

However, in the thermal runaway situation in the battery assembly 10, when internal pressure of the battery assembly 10 is excessively increased, a risk of explosion may be increased. Thus, the battery-protecting flame retardant sheet 300 may be provided to be burst by the internal pressure of the battery assembly 10 when the internal pressure of the battery assembly 10 reaches a predetermined pressure level. The high-pressure gas, the foreign substance, or the like in the battery assembly 10 may be discharged through a burst gap of the battery-protecting flame retardant sheet 300, and accordingly, the internal pressure of the battery assembly 10 may not be increased to a predetermined level or more. When the thermal runaway situation occurs, a portion (e.g., reference numeral 301 of FIGS. 2 and 3) of the battery-protecting flame retardant sheet 300, which corresponds to a position of the venting hole 410, may be transformed outward by the internal pressure of the battery assembly 10. The battery-protecting flame retardant sheet 300 may be transformed by the internal pressure of the battery assembly 10, namely, an external force and may be provided to burst at a predetermined pressure or more.

A conventional flame-retardant sheet may include a notch formed to a portion facing a venting hole of an upper cover. The notch may be a portion of the conventional flame-retardant sheet provided to break under a predetermined pressure or more. As being formed thinly further than another portion in the conventional flame-retardant sheet, or with a groove being formed in the conventional flame-retardant sheet, the notch may be a portion that is formed to be relatively weaker than the other portion of the conventional flame-retardant sheet. Since a process of processing the notch on the flame-retardant sheet is additionally required in order to form the notch, a manufacturing process may become complicated.

Referring to FIGS. 1 through 3, unlike a conventional battery assembly, the flame-retardant sheet 300 included in the battery assembly 10 may be provided so that the notch is not formed to a portion 301 facing the venting hole 410. As being provided to satisfy a bursting strength test that will be described below, the flame-retardant sheet 300 according to an example embodiment of the present may break at the predetermined pressure or more without the notch. Thus, an additional process of processing the notch may not be required.

The battery-protecting flame retardant sheet 300 according to an example embodiment of the present disclosure may be provided to pass two types of tests. The two types of tests are a pyro test and the bursting strength test.

The pyro test which is described in the present disclosure may be performed in a scheme of applying a flame to a surface of the battery-protecting flame retardant sheet 300. For example, the pyro test may be performed as described in the following. To begin with, the battery-protecting flame retardant sheet 300 which is a test subject is cut, so that a quadrangular specimen with a width of 100 mm and a length of 100 mm is prepared. Then, the flame is applied to the prepared specimen, and at this point, a distance between the specimen and an outlet for the flame is maintained to be approximately 140 mm. A temperature of the flame which reaches the specimen may be within a range of 1100 °C ± 10% thereof. The flame may be applied for approximately 10 minutes, and then, a status of the specimen is identified, so that whether the test is passed is determined.

A criterion for passing the pyro test, which is described in the present disclosure, is that the flame does not pass through a back surface of the specimen when the flame with the above-described condition is applied and that a temperature of the back surface is less than or equal to 300 °C.

The bursting strength test which is described in the present disclosure may be a test according to ISO (International Organization for Standardization) 2758:2014. For example, the bursting strength test may be a test of measuring a pressure at which the specimen bursts by applying a pressure to a surface of the specimen along a direction perpendicular thereto.

A criterion for passing the bursting strength test, which is described in the present disclosure, is that bursting strength is less than or equal to 500 kPa.

In consideration of a packaging size and an energy density of the battery assembly 10, a thickness as small as possible may be proper for a thickness of the battery-protecting flame retardant sheet 300 which is applied to the battery assembly 10. To this end, the battery-protecting flame retardant sheet 300 according to the present disclosure may be provided to have an overall thickness of 0.3 mm or less. However, at a time of occurrence of the thermal runaway, a predetermined level or more of thermal insulation and heat resistance may be required in order to prevent or retard the propagation of the flame to an adjacent battery assembly 10, and bursting at the predetermined pressure or more may be required in order to decrease the risk of the explosion. The above-described criteria for passing the pyro test and the bursting strength test may be conditions for satisfying the predetermined specification described above. The battery-protecting flame retardant sheet 300 according to an example embodiment of the present disclosure may be provided to satisfy the criteria for passing the pyro test and the bursting strength test.

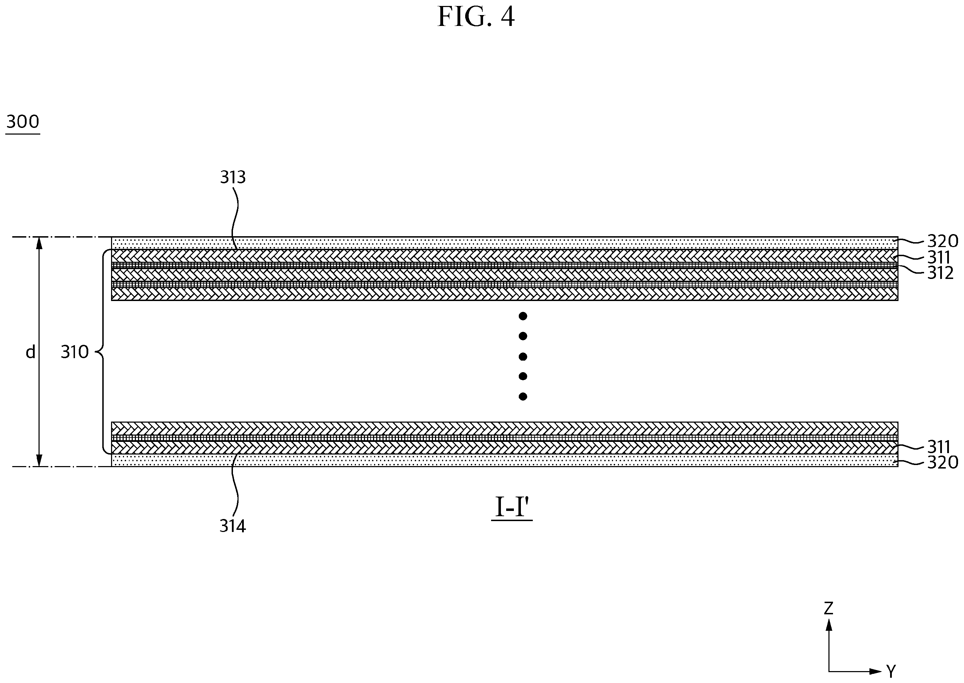

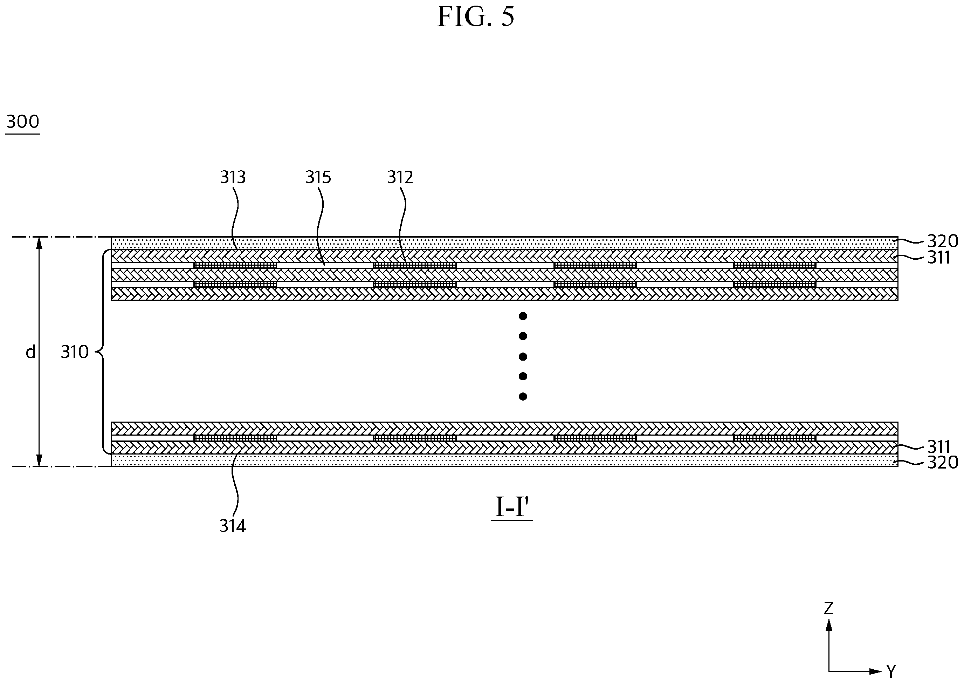

FIG. 4 is a cross-sectional diagram illustrating a cross section, of the battery-protecting flame retardant sheet 300 according to an example embodiment of the present disclosure, taken along line I-I' of FIG. 1. FIG. 5 is a cross-sectional diagram illustrating a cross section, of a battery-protecting flame retardant sheet 300 according to another example embodiment of the present disclosure, taken along line I-I' of FIG. 1.

Referring to FIG. 4, the battery-protecting flame retardant sheet 300 according to an example embodiment of the present disclosure may include a base sheet 311.

The base sheet 311 according to an example embodiment of the present disclosure may include a flame-retardant material. For example, the flame-retardant material may include synthetic mica. The synthetic mica may have excellent flame retardancy, thermal insulation, and chemical resistance. The synthetic mica may be artificially synthesized through a chemical process to have uniform purity. In contrast, a mined natural mineral may be processed into natural mica, and securing uniform purity of the natural mica may be difficult compared to the synthetic mica. As being formed of the synthetic mica, the base sheet 311 according to an example embodiment of the present disclosure may secure uniform flame retardancy for the entire sheet while having a thickness smaller than that in a case in which the base sheet 311 is formed of the natural mica.

Referring to FIG. 4, the battery-protecting flame retardant sheet 300 according to an example embodiment of the present disclosure may include a plurality of base sheets 311 stacked in a first direction (e.g., a direction parallel to a Z-axis direction). The plurality of base sheets 311 may be formed with thin layers and accumulated in layers. At this point, a stacked direction may be defined as the first direction (e.g., the Z-axis direction).

When a flame-retardant layer of the battery-protecting flame retardant sheet 300 is formed with a flame-retardant stack 310 in which a plurality of thin base sheets 311 is stacked, greater flame retardancy may be secured compared to a case in which the flame-retardant layer is formed with a single layer of a thick base sheet 311. For example, the plurality of base sheets 311 stacked in the first direction (e.g., the Z-axis direction) may have an effect of retarding heat transfer due to a predetermined space formed in between.

In addition, when overall thicknesses d of flame-retardant sheets are equally formed, compared to the case in which the flame-retardant layer is formed with the single layer of the thick base sheet 311, bursting strength of the flame-retardant layer may be relatively low when the flame-retardant layer is formed with the flame-retardant stack 310 in which the plurality of thin base sheets 311 is stacked, so that bursting strength less than or equal to 500 kPa may be easily secured.

At this point, a minimum value of a thickness of the base sheet 311 according to an example embodiment of the present disclosure may be 0.006 mm. When being formed to have a thickness smaller than 0.006 mm, the base sheet 311 may be easily damaged by a small external force as not securing sufficient rigidity. A maximum value of the thickness of the base sheet 311 may be limited within a range satisfying an overall thickness d of the battery-protecting flame retardant sheet 300 of the present disclosure. For example, in a case in which the overall thickness is 0.3 mm, a heat-insulating member having a thickness of 0.02 mm is disposed to each of both surfaces of the flame-retardant stack 310, and two base sheets 311 are applied, when a thickness of an adhesive member 312 is ignored, a maximum value of each of the base sheets 311 may be 0.13 mm.

The battery-protecting flame retardant sheet 300 according to an example embodiment of the present disclosure may include the adhesive member 312. The adhesive member 312 may be interposed between the plurality of base sheets 311. The adhesive member 312 may bond and fix an adjacent base sheet 311. The adhesive member 312 may have various types. The adhesive member 312 may be chemically stable, may have high heat resistance, and may be appropriately selected within a range within which a purpose of the present disclosure is not disturbed.

Referring to FIG. 5, the adhesive member 312 according to an example embodiment of the present disclosure may be partially interposed on a surface of the base sheet 311. For example, the adhesive member 312 may not be entirely applied or disposed on the surface of the base sheet 311 and may be applied or disposed so that parts thereof are spaced apart.

The flame-retardant stack 310 of the present disclosure may include an air gap 315. The air gap 315 may be formed between adhesive members 312 that are partially interposed. At this point, the adhesive member 312 of the present disclosure may have a predetermined thickness so that adjacent base sheets 311 are sufficiently spaced apart. The air gap 315 may be formed between the adjacent base sheets 311 to increase an effect of thermal insulation. That is, heat transferred from one base sheet 311 may pass through the air gap 315, and thus, the heat transfer may be retarded.

The battery-protecting flame retardant sheet 300 according to an example embodiment of the present disclosure may include a heat-insulating member 320.

The heat-insulating member 320 according to an example embodiment of the present disclosure may be configured to suppress the heat transfer by including a heat-insulating material. For example, the heat-insulating material may include a ceramic material. Specifically, the heat-insulating material may be formed of a ceramic-based coating agent. For example, the ceramic-based coating agent may include one or more of an aluminum oxide (alumina, Al₂O₃) coating, a zirconium oxide (zirconia, ZrO₂) coating, a titania (TiO₂) coating, silica-based coatings, and glass ceramic coatings.

The heat-insulating member 320 according to an example embodiment of the present disclosure may be disposed on at least one of both outermost surfaces of the flame-retardant stack 310 that are in the first direction (e.g., the Z-axis direction). For example, the heat-insulating member 320 may be disposed on the both surface of the flame-retardant stack 310. The flame-retardant stack 310 may include a first surface 313 and a second surface 314. The first surface 313 may be a surface facing the upper cover 400 when being applied to the battery assembly 10, and the second surface 314 may be a surface opposite to the first surface 313 and facing the plurality of battery cells 100. The heat-insulating member 320 may be stacked on the first surface 313 and the second surface 314. In other words, the first surface 313 and the second surface 314 each may be coated with the heat-insulating member 320.

A thickness of the heat-insulating member 320 according to an example embodiment of the present disclosure may be greater than or equal to 0.02 mm and less than or equal to 0.1 mm. the heat-insulating member 320 may be coated on at least one surface of the flame-retardant stack 310, so that the heat-insulating member 320 may secure an excellent thermal insulation effect even with a small thickness. The heat-insulating member 320 may be a ceramic-based coating layer. In order to secure sufficient thermal insulation, coating may be performed while the thickness of the heat-insulating member 320 is greater than or equal to 0.02 mm. However, in consideration of an increase in the overall thickness d of the battery-protecting flame retardant sheet 300, the heat-insulating member 320 may be formed to have a thickness of 0.1 mm or less.

The overall thickness d of the battery-protecting flame retardant sheet 300 according to an example embodiment of the present disclosure may be greater than or equal to 0.05 mm and less than or equal to 0.3 mm. The overall thickness d may refer to a thickness including the flame-retardant stack 310 and the heat-insulating member 320, which is in the first direction (e.g., the Z-axis direction). In consideration of a packaging size of the battery assembly 10, a maximum value of the overall thickness d may be 0.3 mm. A minimum value of the overall thickness d may be 0.05 mm in order to satisfy criteria for passing a pyro test and a bursting strength test. When the overall thickness d of the battery-protecting flame retardant sheet 300 exceeds 0.3 mm, since causing a change in the packaging size of the battery assembly 10, the battery-protecting flame retardant sheet 300 may be difficult to be applied to the battery assembly 10. Also, when the overall thickness d of the battery-protecting flame retardant sheet 300 exceeds 0.3 mm, passing the bursting strength test may be difficult. In addition, when the overall thickness d of the battery-protecting flame retardant sheet 300 is less than or equal to 0.005 mm, sufficient flame retardancy may not be secured, so that the pyro test may not be passed.

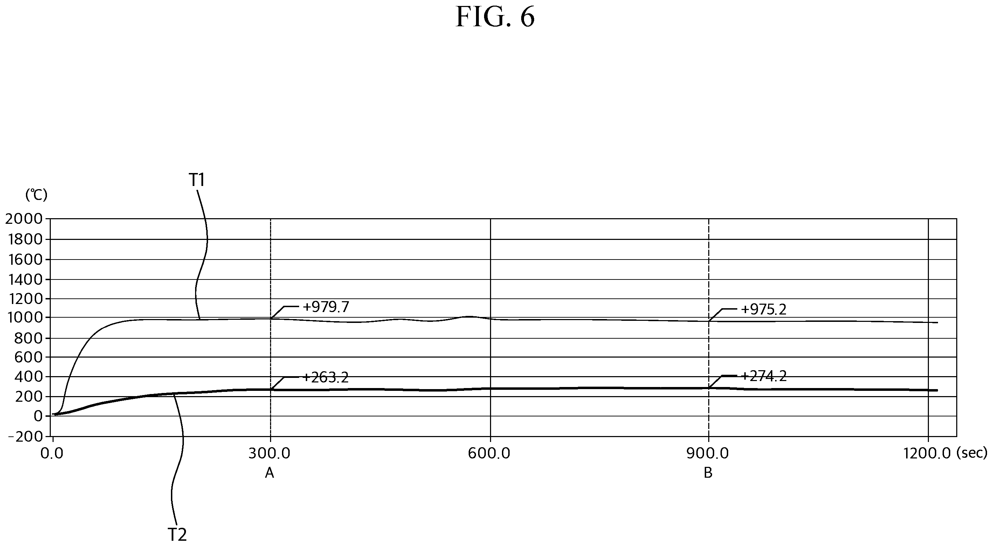

FIG. 6 is a graph in which a temperature T1 of a front surface and a temperature T2 of a back surface of the battery-protecting flame retardant sheet 300 are measured over time, with the overall thickness d of the flame-retardant sheet being formed as 0.12 mm, while a pyro test is performed.

A time at which applying a flame begins has been set to 0.0 seconds (sec), and the temperature T1 of the front surface and the temperature T2 of the back surface of the flame-retardant sheet over time have been measured. Also, a time point at which 300 sec elapse since the test begins is A, a time point at which 900 sec elapse is B, and a result of calculating the temperature T2 of the back surface in a period between A and B is in the following Table 1.

**[Table 1]**

| | Temperature at A | Temperature at B | Minimum temperature in A-B period | Maximum temperature in A-B period | Average temperature in A-B period |
|---|---|---|---|---|---|
| Front surface | +979.7 °C | +975.2 °C | +972.1 °C | +999.9 °C | +984.9 °C |
| Back surface | +263.2 °C | +274.2 °C | +256.9 °C | +282.3 °C | +271.7 °C |

As described in Table 1, the temperature T2 of the back surface at a time point at which 600 sec that are 10 minutes elapse since the pyro test begins may be identified as being lower than 300 °C. Even when an average and a maximum value of the temperature T2 of the back surface in an A-B period are identified, the temperature T2 of the back surface may be identified as not exceeding 300 °C.

Also, as a result of performing, two times, a bursting strength test with the overall thickness d of the battery-protecting flame retardant sheet 300 being formed as 0.12 mm, bursting strength has been individually measured as 324.64 kPa and 328.02 kPa and identified as being less than or equal to 500 kPa.

As described above, the present disclosure is illustrated and described with desirable example embodiments for show an example of the principle of the present disclosure. However, the present disclosure is not limited to configurations and actions illustrated and described therein. Instead, those skilled in the art may easily understand that multiple changes and corrections in the present disclosure are allowed without deviating from the spirit and the scope of the accompanying claims.

## Claims

1. A battery-protecting flame retardant sheet disposed inside or outside a battery assembly, the battery-protecting flame retardant sheet comprising:
a flame-retardant stack including a plurality of base sheets including a flame-retardant material and stacked in a first direction and an adhesive member interposed between the plurality of base sheets; and
a heat-insulating member that includes a heat-insulating material, is configured to suppress heat transfer, and is disposed on at least one of the two outermost surfaces in the first direction of the flame-retardant stack.

2. The battery-protecting flame retardant sheet of claim 1, wherein the flame-retardant material of the plurality of base sheets comprises synthetic mica.

3. The battery-protecting flame retardant sheet of claim 2, wherein an overall thickness in the first direction, including the flame-retardant stack and the heat-insulating member, is greater than or equal to 0.05 mm and less than or equal to 0.3 mm.

4. The battery-protecting flame retardant sheet of claim 3, wherein a minimum value of a thickness of the base sheet is 0.006 mm.

5. The battery-protecting flame retardant sheet of claim 4, wherein the heat-insulating material of the heat-insulating member includes a ceramic material.

6. The battery-protecting flame retardant sheet of claim 5, wherein the heat-insulating member is coated on both surfaces of the flame-retardant stack.

7. The battery-protecting flame retardant sheet of claim 6, wherein a thickness of the heat-insulating member is greater than or equal to 0.02 mm and less than or equal to 0.1 mm.

8. The battery-protecting flame retardant sheet of claim 7, wherein the flame-retardant stack and the heat-insulating member stacked in the first direction are configured to have a maximum bursting strength value of 500 kPa against an external force acting in the first direction.

9. The battery-protecting flame retardant sheet of claim 1, wherein the adhesive member is partially disposed on a surface of the base sheet.

10. The battery-protecting flame retardant sheet of claim 9, wherein the flame-retardant stack includes an air gap formed between the adhesive members which are partially disposed.

11. A battery assembly comprising:
the battery-protecting flame retardant sheet of claim 1;
a plurality of battery cells; and
a main frame configured to receive the plurality of battery cells.
